# FASCICULE DE BREVET EUROPEEN

(11) **EP 3 107 710 B1**
(45) Date de publication et mention de la délivrance du brevet: **04.01.2023**
(21) Numéro de dépôt: 15701828.4
(22) Date de dépôt: 14.01.2015
(51) Int. Cl.: B29C 55/16

(54) **MACHINE D'ÉTIRAGE DE FILMS OU DE FEUILLES**
MASCHINE ZUM STRECKEN VON FILMEN ODER FOLIEN
MACHINE FOR STRETCHING FILMS OR SHEETS

(30) Priorité: 22.01.2014 FR 1400122
(43) Date de publication de la demande: 28.12.2016
(73) Titulaire: Brückner Maschinenbau GmbH & Co. KG, 83313 Siegsdorf (DE)
(72) Inventeur: TRIVERO, Gilbert, F-73800 La Chavanne (FR)
(74) Mandataire: Flach Bauer & Partner Patentanwälte mbB
(86) Numéro de dépôt international: PCT/FR2015/000013
(87) Numéro de publication internationale: WO 2015/110729

(56) Documents cités:
- US-A- 3 014 234
- US-A- 3 148 409
- US-A- 3 491 402

## Description

La présente invention concerne les machines d'étirage de films ou de feuilles, notamment de films en matière plastique et plus particulièrement les machines de ce genre étirant simultanément un film. L'invention vaut particulièrement pour l'étirage simultané angulaire. La matière plastique préchauffée est étirée simultanément dans le sens longitudinal et dans le sens transversal avec un angle d'étirage dans le film étiré qui est différent de 90° en étant par exemple de 45° ou de 135°.

L'étirage simultané angulaire s'effectue à l'aide d'une machine comprenant deux voies. Chaque voie a un premier rail sur lequel se déplace des pinces qui se ferment en un point de réglage de leur pas. Chaque voie comporte un second rail sur lequel se déplacent des chariots articulés en une chaîne entraînée par une roue dentée d'entraînement. Chaque chariot est articulé respectivement à deux pinces consécutives de manière à régler le pas des pinces, c'est-à-dire leur distance mutuelle le long de la voie. Une machine d'étirage de ce genre est exposée par exemple au brevet français 2 849 801.

Des problèmes techniques ont affecté la production d'une machine de ce genre. On a constaté au fur et à mesure de la production un changement des propriétés optiques du film. Il s'est produit parfois une rupture du film.

L'invention pallie ces inconvénients par une machine d'étirage de films, principalement en matière plastique, du type indiqué ci-dessus.

Suivant l'invention, un mécanisme d'indexation du point de réglage du pas des pinces est formé d'une part par une roue dentée d'indexation, disposée en aval, dans le sens de déplacement de la roue d'entraînement de la chaîne, et entraînée à la même vitesse périphérique que la roue d'entraînement et d'autre part par un galet du chariot pénétrant dans un entredent de la roue d'indexation lorsque la pince, la plus en aval dans le sens de déplacement de la chaîne correspondant à ce chariot, est au point de réglage du pas des pinces.

On a compris maintenant que l'étirage angulaire engendre des composantes de forces angulaires sur les pinces qui remontent en amont du point d'étirage jusqu'au point de réglage du pas des pinces du côté mené. Le pas des pinces se modifie et au fil du temps il se produit une fluctuation de l'angle d'étirage qui provoque le changement des propriétés optiques du film et parfois sa rupture. Par un mécanisme d'indexation du point de réglage du pas des pinces, il est remédié entièrement à ces effets néfastes, pourvu que le mécanisme d'indexation soit insensible aux forces appliquées aux pinces à l'étirage, en étant notamment constitué de manière indépendante du reste de la machine, c'est-à-dire par une pièce rapportée qui n'est pas liée mécaniquement au reste de la machine autrement que par ce qui est nécessaire à l'indexation.

Le pas est maintenu fixe et ce réglage s'effectue en dehors de la zone d'étirage du film. Au US 3 148 409A, on ne mentionne pas la pénétration d'un galet de chaîne solidaire de chaque pince dans un entredent de roue dentée côté film. Au US 3 491 402A les figures 8 et 9 définissent un changement d'état du pas de pinces entre les deux roues dentées. En un premier point, le pas de pinces est maximum alors qu'en un deuxième point le pas de pinces est minimum. La roue au premier point n'a pas de fonction d'indexation spécifique du pas de pinces, puisque les pinces en amont de cette roue arrivent au pas maximum.

Cette roue (au premier point) assume une fonction d'isolement du mouvement des pinces entre leur état complètement ouvert et l'état complètement fermé (roue au deuxième point) avec un rapport fixe entre les deux roues (chaîne). La roue au premier point n'a pas de fonction d'indexation intermédiaire du pas de pinces. Il n'est pas défini une sélection du pas de pinces intermédiaire autre que les pas de pinces extrêmes sans facteur de prise en pince du film. Par ailleurs, la variation de vitesse de la roue au premier point ne peut pas être ajustée en fonctionnement au regard de la roue (deuxième point).

Suivant l'invention, il est défini un réglage précis du pas de pinces lors de la prise en pince du film avec une précision liée à la présence de la pince sur le diamètre primitif de la roue dentée, alors qu'au US 3 491 402A on ne définit pas un réglage modulable de la prise en pince du film.

Le US 3 014 234A ne traite pas de la gestion des pinces entre la zone de prise en charge du film à l'entrée du four d'étirage et la zone d'étirage du film, puisque ce brevet ne décrit que le principe d'étirage du film et non la prise en pince. Les avantages de l'invention par rapport à la machine décrite au US 3 014 239A sont :
- Précision de fabrication du film avec précision accrue du pas de pinces lors de la prise en pince du film. Le film est pris en pince alors que la pince est toujours indexée sur la roue de synchronisation. Le pas de pince fixe initial est respecté sans déviation émanant d'un étirage angulaire possible du film provenant des zones d'étirage.

La qualité des films étirés dépend principalement de la précision d'étirage entraînant la qualité et le respect des propriétés des films. Pour cela la précision de prise en pince nécessite une importance particulière pour l'étirage transversal et longitudinal des films.

L'indexation du pas de pinces de ce document antérieur est réalisée avec un dispositif composé d'un doigt monté sur chaque pince associé à une vis à pas variable. Ce dispositif uniquement adapté à une zone d'étirage ne peut s'adapter à une ligne de production. Avec un tel dispositif, le paramétrage de la variation du pas de pince en production n'est pas possible.
- Rapidité du changement de pas de pinces avec une roue de faible encombrement qui peut être rapidement remplacée dans démontage de pinces. Une gamme de roues dentées correspondant aux pas de pinces peut être ainsi réalisée afin de réduire les temps occasionnés par les changements de paramètres.

La modification du pas de pinces dans le document antérieur impose un démontage intégral des pinces, ainsi qu'un démontage de la vis à pas variable.

En général, suivant l'invention, les rails sont verticaux et les galets du chariot sont sur un axe vertical. Les galets sont notamment des galets de roulement contre le rail extérieur. La roue dentée d'indexation a un axe vertical, tout comme la roue dentée d'entraînement. La machine a deux roues dentées d'entraînement et deux roues dentées d'indexation. Les diamètres des roues d'indexation perpendiculaires à la direction de déplacement de la chaîne sont alignés. Suivant un mode de réalisation, il est prévu un dispositif de montage de la roue d'indexation permettant de remplacer une roue d'indexation d'un diamètre donné par une roue d'indexation d'un autre diamètre afin de pouvoir modifier le pas de pince.

Suivant un mode de réalisation, une rampe de fermeture des pinces est montée au point de réglage du pas des pinces de manière fixe sur le bâti de la machine.

Les diamètres des deux roues d'indexation perpendiculaires au rail peuvent être colinéaires, mais elles peuvent aussi être décalées l'une par rapport à l'autre dans le sens du déplacement de la chaîne.

De préférence, la roue d'indexation a au moins 8 dents. Un nombre de dents assez grand permet de régler davantage de pinces par unité de temps et de régler plus facilement le pas des pinces.
La figure 1 du dessin annexé est un schéma vu en plan d'une partie d'une machine suivant l'invention.
La figure 2 est une vue en plan d'une roue d'indexation, et
la figure 3 est une vue d'une variante suivant la figure 1.

La machine d'étirage de film suivant l'invention a une enceinte régulée en température dans laquelle passent deux voies. Chaque voie a un premier rail 1 intérieur et un deuxième rail 2 extérieur qui sont parallèles, divergents ou convergents entre eux. Les rails 1 et 2 sont sans fin. Sur le premier rail se déplace une multitude de pinces 3 qui se ferment en un point de réglage du pas sous une rampe 4 fixe de fermeture des pinces. Le film à étirer est tenu par les deux bords opposés par les pinces 3 qui peuvent être telles que décrit au brevet français 2 686 041. Sur le second rail 2 se déplacent des chariots 5. Les chariots 5 sont articulés en une chaîne entraînée par une roue 6 dentée, disposée en amont du point de réglage du pas, à deux pinces 3 consécutives par deux biellettes 7 de manière à régler le pas des pinces 3, c'est-à-dire leur distance mutuelle, lorsque l'angle entre les deux biellettes se modifie. Les chariots 5 roulent par un galet vertical de roulement contre le rail 2 extérieur.

Suivant l'invention, il est prévu comme moyen d'indexation du point de réglage du pas des pinces 3 une roue 8 dentée d'indexation, disposée en aval, dans le sens de déplacement de la chaîne, de la roue 6 et entraînée à la même vitesse périphérique que la roue 6, le galet vertical du chariot 5 pénétrant dans un entredent de la roue 8 lorsque la pince 3 la plus en aval dans le sens de déplacement de la chaîne correspondant à ce chariot 5 est au point de réglage du pas. La roue 8 ainsi régulée en vitesse ne supprime pas les effets de tensions qui se produisent en aval en raison de l'étirage angulaire du film. Le pas des pinces reste le même au fur et à mesure que la machine fonctionne.

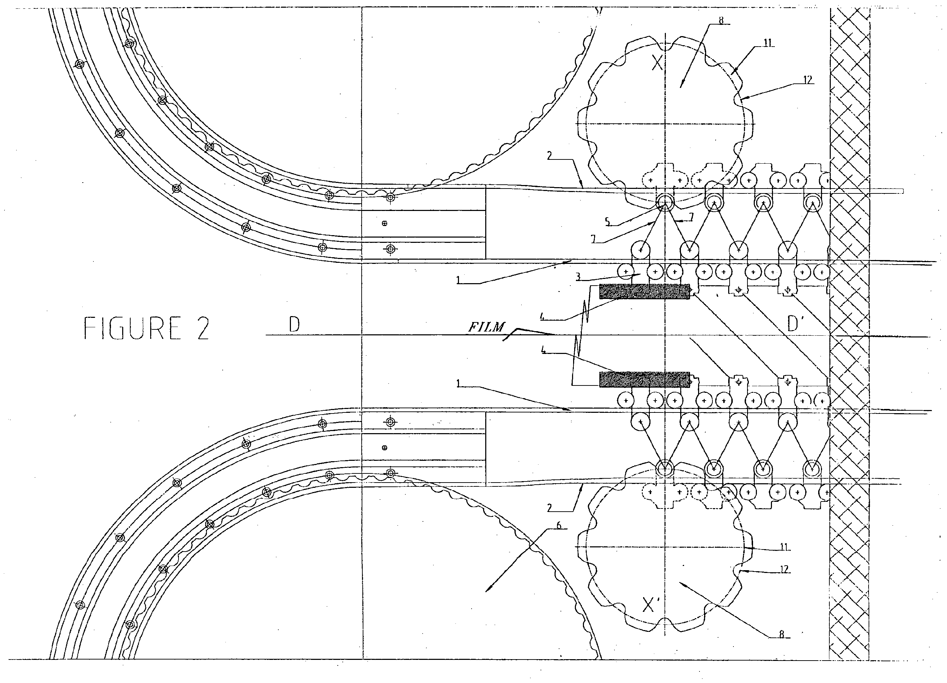

La figure 2 est une vue en plan d'une roue d'indexation qui s'adapte à une variation de pas de pinces de 90 à 160 mm. (Exemple d'une roue de 10 dents 11 séparées par des entredents 12)

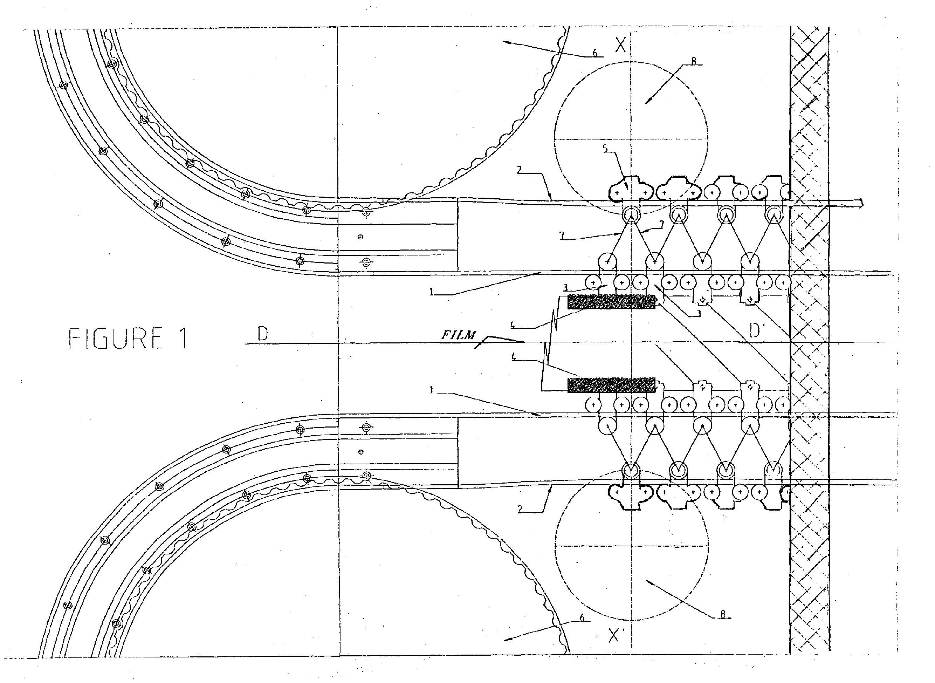

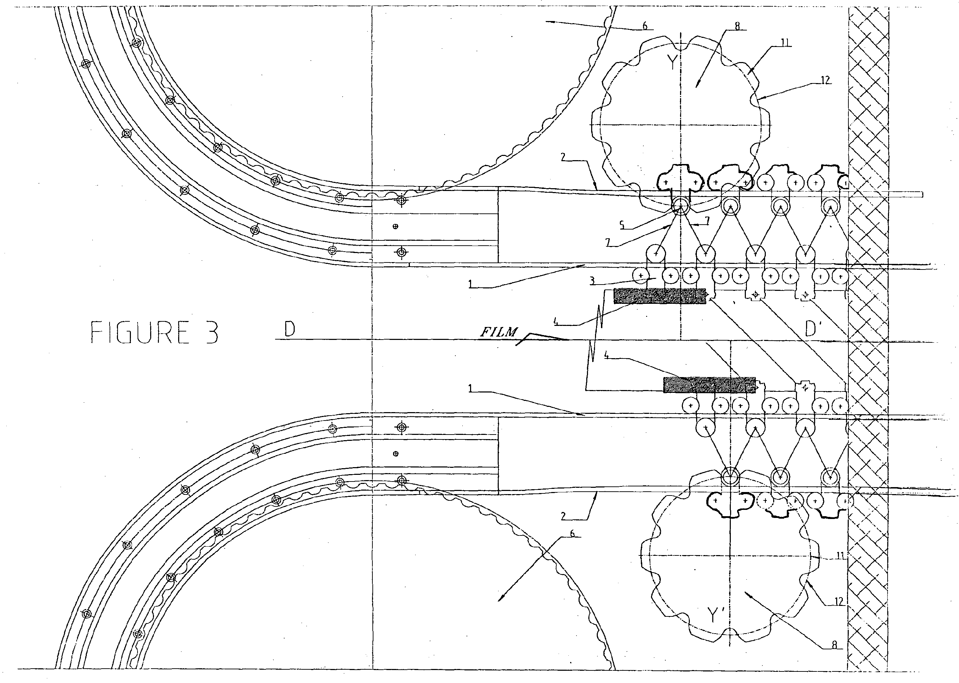

La figure 3 est une vue schématique suivant l'invention dans laquelle les deux roues d'indexation sont décalées dans la direction de la droite D, D' alors qu'à la figure 1 les diamètres de ces roues perpendiculaires à la direction D, D' sont alignés.

## Revendications

1. Machine d'étirage de films, comprenant deux voies ayant chacune un premier rail (1) sur lequel se déplacent des pinces (3) se fermant en un point de réglage de leur pas et un second rail (2) sur lequel se déplacent des chariots (5) articulés, en une chaîne entraînée par une roue (6) dentée d'entraînement, respectivement à deux pinces (3) consécutives, la machine ayant un mécanisme d'indexation du point de réglage du pas des pinces (3), le mécanisme d'indexation est formé d'une part par une roue (8) dentée d'indexation, disposée en aval dans le sens de déplacement de la chaîne au point de réglage du pas des pinces (3) et entraînée à la même vitesse périphérique que la roue (6) d'entraînement et d'autre part par un galet du chariot pénétrant dans un entredent de la roue (8) d'indexation lorsque la pince la plus en aval dans le sens de déplacement de la chaîne au point de réglage du pas des pinces (3) et correspondant à ce chariot est au point de réglage du pas des pinces.

2. Machine d'étirage de films selon la revendication 1, **caractérisée en ce qu'**elle a deux roues dentées d'indexation et **en ce que** les diamètres des deux roues, perpendiculaires aux rails, sont colinéaires.

3. Machine d'étirage de films selon la revendication 2, **caractérisée en ce qu'**elle a deux roues dentées d'indexation et **en ce que** les deux roues dentées d'indexation sont décalées l'une par rapport à l'autre dans le sens du déplacement de la chaîne.

4. Machine d'étirage de films selon l'une des revendications 1 à 3, **caractérisée en ce que** la roue dentée d'indexation a au moins 8 dents.

## Patentansprüche

1. Folienstreckmaschine, umfassend zwei Bahnen, die jeweils eine erste Schiene (1), auf der sich Klammern (3) bewegen, die sich an einem Einstellpunkt ihres Abstands schließen, und eine zweite Schiene (2), auf der sich Schlitten (5) bewegen, die in einer Kette, die von einem Antriebszahnrad (6) angetrieben wird, jeweils an zwei aufeinanderfolgenden Klammern (3) angelenkt sind, aufweisen, wobei die Maschine einen Indexierungsmechanismus des Einstellpunkts des Abstands der Klammern (3) aufweist, wobei der Indexierungsmechanismus einerseits von einem Indexierungszahnrad (8) gebildet ist, das stromabwärts in der Bewegungsrichtung der Kette an dem Einstellpunkt des Abstands der Klammern (3) angeordnet ist, und mit der gleichen Umfangsgeschwindigkeit wie das Antriebsrad (6) angetrieben wird, und andererseits durch eine Rolle des Schlittens, die in eine Zahnlücke des Indexierungsrads (8) eindringt, wenn die in der Bewegungsrichtung der Kette am weitesten stromabwärts liegende Klammer an dem Einstellpunkt des Abstands der Klammern (3) und entsprechend diesem Schlitten an dem Einstellpunkt des Abstands der Klammern ist.

2. Folienstreckmaschine nach Anspruch 1, **dadurch gekennzeichnet, dass** sie zwei Indexzahnräder aufweist und dass die Durchmesser der zwei Räder, die senkrecht zu den Schienen sind, kollinear sind.

3. Folienstreckmaschine nach Anspruch 2, **dadurch gekennzeichnet, dass** sie zwei Indexierungszahnräder aufweist und dass die zwei Indexierungszahnräder in der Bewegungsrichtung der Kette in Bezug aufeinander versetzt sind.

4. Folienstreckmaschine nach einem der Ansprüche 1 bis 3, **dadurch gekennzeichnet, dass** das Indexzahnrad mindestens 8 Zähne aufweist.

## Claims

1. Film stretching machine, comprising two tracks, each having a first rail (1) on which clamps (3) move, closing at an adjustment point of their pitch, and a second rail (2) on which articulated carriages (5) move, in a chain driven by a toothed drive wheel (6), respectively to two consecutive clamps (3), the machine having an indexing mechanism for the pitch adjustment point of the clamps (3), the indexing mechanism is formed, on the one hand, by a toothed indexing wheel (8), which is arranged downstream in the direction of movement of the chain at the pitch adjustment point of the clamps (3) and is driven at the same peripheral speed as the drive wheel (6), and, on the other hand, by a roller of the carriage engaging in a tooth space of the indexing wheel (8) when the clamp which is furthest downstream in the direction of movement of the chain at the pitch adjustment point of the clamps (3), and which corresponds to this carriage, is at the pitch adjustment point of the clamps.

2. Film stretching machine according to claim 1, **characterised in that** it has two toothed indexing wheels and **in that** the diameters of both wheels, perpendicular to the rails, are collinear.

3. Film stretching machine according to claim 2, **characterised in that** it has two toothed indexing wheels and **in that** the two toothed indexing wheels are offset from each other in the direction of movement of the chain.

4. Film stretching machine according to one of claims 1 to 3, **characterised in that** the toothed indexing wheel has at least 8 teeth.
